# EUROPEAN PATENT APPLICATION

(11) **EP 2 587 574 A1**
(43) Date of publication of application: **01.05.2013**
(21) Application number: 11800844.0
(22) Date of filing: 28.06.2011
(51) Int. Cl.: H01M 4/70, H01M 4/134, H01M 4/38, H01M 4/66

(54) **ELECTROLYTIC COPPER FOIL, ELECTROLYTIC COPPER FOIL FOR LITHIUM ION SECONDARY BATTERY, ELECTRODE FOR LITHIUM ION SECONDARY BATTERY USING THE ELECTROLYTIC COPPER FOIL, AND LITHIUM ION SECONDARY BATTERY USING THE ELECTRODE**

(30) Priority: 24.06.2011 JP 2011140270; 28.06.2010 JP 2010145869
(71) Applicant: Furukawa Electric Co., Ltd., Chiyoda-ku Tokyo 100-8322 (JP)
(72) Inventor: SHINOZAKI, Kensaku, Tokyo 100-8322 (JP); SUZUKI, Akitoshi, Tokyo 100-8322 (JP)
(74) Representative: Thun, Clemens
(86) International application number: PCT/JP2011/064797
(87) International publication number: WO 2012/002380

(57) **Abstract**

A lithium ion secondary battery, which uses a negative electrode wherein an active material is deposited on a collector, and which is characterized in that no wrinkles are formed on the collector, the collector does not fracture, the adhesion between the active material and the collector is high, and stable performance can be maintained for a long period of time; an electrode for the secondary battery; and an electrolytic copper foil that constitutes the electrode. Specifically disclosed is an electrolytic copper foil for a lithium ion secondary battery, in which a surface-roughened layer of copper or copper alloy particles having a particle diameter of 0.1-3 µm is formed on both surfaces of an untreated copper foil by roughening treatment by means of electrolysis, and the surface-roughened layers on both surfaces have a surface roughness Rz of 1.0-5 µm and a surface roughness Ra of 0.25-0.7 µm, with the Rz difference between the front and back surfaces being within 3 µm and the Ra differences between the front and back surfaces being within 0.3 µm.

## Description

### Technical Field

The present invention relates to an electrolytic copper foil.
Further, the present invention relates to a lithium ion secondary battery, which is provided with a positive electrode, a negative electrode which is comprised of a negative electrode active material layer formed on the surface of a negative electrode current collector having a surface which is formed with uneven shapes, and a nonaqueous electrolyte; an electrode to be used in that secondary battery; and an electrolytic copper foil for lithium ion secondary battery collector which forms part of the collector of that electrode.

### Background Art

A lithium ion secondary battery which is provided with a positive electrode, a negative electrode which is formed by coating and pressing carbon particles as a negative electrode active material layer on a surface of a negative electrode current collector which is comprised of copper foil with smooth surfaces, and a nonaqueous electrolyte, is currently being used in mobile phones, notebook type personal computers, etc. As the negative electrode of this lithium ion secondary battery, one obtained by rust-proofing so-called "untreated electrolytic copper foil" which is produced by electrolysis, is being used.

As the negative electrode current collector for the lithium ion secondary battery, a copper foil in which a difference of surface roughness between a shiny surface and a matte surface (the two surfaces of the copper foil) is made small is being used so as to prevent the drop in the charge/discharge efficiency of the battery (see Patent Literature 1).

The electrolytic copper foil with a difference of surface roughness between the shiny surface and the matte surface made small as described above, is produced by suitably selecting and adding various types of water-soluble polymers, various types of surfactants, various types of organic sulfur compounds, chlorine ions, or the like to an electrolytic solution.
For example, there is disclosed a method of production of an electrolytic copper foil which uses an electrolytic solution to which a compound which has a mercapto group, chloride ions, and molecular weight 10000 or less low molecular weight glue and polysaccharide polymer have been added. (See Patent Literature 2.)
In the electrolytic copper foil produced by the above production method, carbon particles are coated and pressed on the surfaces of the copper foil to form a negative electrode.

Incidentally, in recent years, for the purpose of raising the capacity of the lithium ion secondary battery, there has been proposed a lithium ion secondary battery using an element which is electrochemically alloyed with lithium at the time of charging such as germanium, silicon, tin, or the like in a powder (primary particle) state as the negative electrode active material (see Patent Literature 3).

In an electrode (negative electrode) for lithium ion secondary battery designed to raise the capacity, CVD or sputtering is used to deposit and form on a copper foil or other collector, for example, silicon as an amorphous silicon thin film or microcrystalline silicon thin film. A thin film layer of an active material prepared by such a method is closely adhered to the collector, so it is found that a good charge-discharge cycle characteristic is shown (see Patent Literature 4).

Further, recently, there has also been developed a method of formation which renders silicon powder into a slurry state by an organic solvent together with an imide-based binder, coats it on copper foil, then dries and presses it to form an electrode. However, it is pointed out that a substance such as powdered silicon or tin generally have particle size of a small 0.1 to 3 µm, therefore is difficult to coat on a negative electrode current collector with a uniform thickness and good adhesion and suffers from problems in coating property.

Proposals considering the above points and improving the active material are disclosed in Patent Literatures (PLT's) 6, 7, etc. That is, PLT 6 discloses to form a carbon-based active material by secondary particles which are obtained by coating amorphous carbon on surfaces of primary particles of crystalline carbon. Further, PLT 7 proposes an active material comprised of secondary particles which are obtained by mixing silicon, tin, and copper, melting and alloying them, then crushing the result and compounding carbon with it.
The active material comprised of secondary particles is obtained by precisely mixing the primary active material with a thickener, conductive aid, and binder and granulating the mixture by the spray dryer method so as to give aggregation of individual primary particles. In this way, the secondary particles are characterized by mixture of the binder, thickener, or conductive aid causing the expansion of the primary particles to occur inside the aggregation (secondary particles) and be absorbed inside the aggregation (secondary particle), and therefore there being little volume change. It has been considered that by employing these secondary particles as the active material (will be explained later), the phenomenon of the active material becoming finer during the charge-discharge action and therefore the power collection function falling can be suppressed. In these PLT's 6, 7, etc., however, no detailed study has been made on a collector which is suitable for the secondarily processed active material, that is, the copper foil.
In these secondarily processed active materials, the shape of the particles becomes larger, therefore the coating step becomes easier by this alone. However, a complex process for forming the secondary particles is added, therefore it suffers from the disadvantage of the poor productivity.

When, for example, employing a silicon active material for the electrode for lithium ion secondary battery, the active material occludes the lithium ions at the time of charging as a battery, whereby its volume expands to a maximum of about 4X. At the time of discharge, it releases the lithium ions and contracts.
Accordingly, the phenomenon of the active material being pulverized and falling away from the collector due to expansion and contraction of the volume of the active material layer along with charging/discharging is seen.
Further, the active material layer closely adheres to the collector. Therefore, it suffers from the disadvantage that a large stress acts upon the collector when the active material layer expands and/or contracts in volume due to repetition of charging/discharging.

When an electrode with large expansion and contraction is accommodated in a battery and charging/discharging is repeated many times, the collector also expands/contracts, therefore wrinkles may be formed. In order to allow such wrinkles, it is necessary to provide extra leeway for the volume to be occupied by the electrode in the battery, so the disadvantage arises that an energy density (or charge-discharge capacity) per volume falls.

Further, when trying to improve the energy density (or charge- discharge capacity) per volume, the extra leeway for expansion and contraction of the collector is reduced, therefore there arises the disadvantage of the collector fracturing and stable battery performance no longer being able to be maintained.

### List of Prior Arts

### Patent Literature

PLT 1: Japanese Patent No. 3742144
PLT 2: Japanese Patent No. 3313277
PLT 3: Japanese Patent Publication No. 10-255768 A1
PLT 4: Japanese Patent Publication No. 2002-083594 A1
PLT 5: Japanese Patent Publication No. 53-39376 B2
PLT 6: Japanese Patent Publication No. 11-354122 A1
PLT 7: Japanese Patent Publication No. 2007-165061 A1

### Summary of the Invention

### Problems to be solved by the Invention

As explained above, when using, for the negative electrode for a lithium ion secondary battery, a collector on which an active material containing silicon, germanium, or tin as the principal ingredient is deposited in a state of primary particles, the volume of the active material layer expands/contracts along with a charge/discharge reaction and a large stress acts upon the collector, so wrinkles and/or other deformation are caused in the collector. Further, if charging/discharging is repeated many times, the disadvantage arises that the foil constituting the collector breaks.
When wrinkles or other deformation occur in the collector, the volume occupied by the negative electrode inside the battery becomes larger, therefore the energy density per volume falls. Further, if the collector breaks, stable battery performance over a long period of time can no longer be maintained.

Further, an active material comprised of silicon, tin, or other primary particles has a small particle size. Therefore, when it is rendered to a slurry state and is coated on the negative electrode current collector, it is difficult to coat it with a uniform thickness and good adhesion. In particular, when the front/back difference of surface roughness of the collector is large, it becomes more difficult to coat the active material on both of the front and back surfaces with a uniform thickness, therefore an adverse influence is exerted upon the output characteristic and cycle characteristic of the battery.

An object of the present invention is to provide a lithium ion secondary battery which uses a negative electrode which is formed by depositing an active material containing, for example, silicon, germanium, or tin as the principal ingredient on a collector, wherein wrinkles are not formed in the collector, breakage of the collector does not occur, the adhesion between the active material and the collector is high, and stable performance can be maintained for a long period of time.
Another object is to provide an electrode for a secondary battery and an electrolytic copper foil which forms the collector of the electrode which exhibit excellent effects without processing the silicon, germanium, or tin to secondary particles or for an active material which is processed to secondary particles.

### Means for Overcoming the Problems

An electrolytic copper foil of the present invention is electrolytic copper foil which comprises an untreated copper foil, on the both front and back surfaces of which relief (uneven) roughened layers comprised of copper or copper alloy and having a particle size of 3 µm or less, are provided by roughening treatment of electroplating, surface roughnesses Rz of the relief (uneven) roughened layers of the both surfaces being 1.0 to 5 µm or surface roughness Ra of the relief (uneven) roughened layers being 0.25 to 0.7 µm, and
a difference of a roughness between the roughnesses Rz of the front and back surfaces being within 3 µm or a difference of a roughness between the roughnesses Ra of the front and back surface being within 0.3 µm.

Preferably, the untreated copper foil is a copper foil composed of a granular crystal.

The copper alloy of the roughening treatment is preferably comprised of Cu as the principal ingredient and contains Mo, Fe, Ni, Co, W, As, or Zn or an alloy which contains one or more of these.

An electrolytic copper foil for lithium ion secondary battery of the present invention is an electrolytic copper foil for lithium ion secondary battery which comprises an untreated copper foil, on the both front and back surfaces of which relief (uneven) roughened layers comprised of copper or copper alloy and having a particle size of 3 µm or less, are provided by roughening treatment of electroplating,
surface roughnesses Rz of the relief (uneven) roughened layers of the both surfaces being 1.0 to 5 µm or surface roughness Ra of the relief (uneven) roughened layers being 0.25 to 0.7 µm, and a difference of a roughness between the roughnesses Rz of the front and back surfaces being within 3 µm or a difference of a roughness between the roughnesses Ra of the front and back surface being within 0.3 µm.

Further, an electrolytic copper foil for lithium ion secondary battery of the present invention is an electrolytic copper foil for lithium ion secondary battery which comprises an untreated copper foil, on the both front and back surfaces of which relief (uneven) roughened layers comprised of copper or copper alloy and having a particle size of 3 µm or less, are provided by roughening treatment of electroplating, surface roughnesses Rz of the relief (uneven) roughened layers of the both surfaces being 1.0 to 5 µm or surface roughness Ra of the relief (uneven) roughened layers being 0.25 to 0.7 µm,and a difference of a roughness between the roughnesses Rz of the front and back surfaces being within 3 µm or a difference of a roughness between the roughnesses Ra of the front and back surface being within 0.3 pm, and a distance between adjoining projecting tips of the relief (uneven) roughened surface being larger than an average particle size of primary particles of an active material of the lithium ion secondary battery and being smaller than or equal to an average particle size of secondary particle of the active material of the lithium ion secondary battery.

Preferably, the surface area ratio after the roughening treatment is 2 to 6X (times).

The electrolytic copper foil for lithium ion secondary battery is used as the collector, and the active material which is deposited on its surface is comprised of primary particles of silicon, germanium, or tin or an alloyed compound of the same or of secondary particles which are obtained by processing the primary particles.

A lithium ion secondary battery of the present invention is a lithium ion secondary battery using the above electrode for a lithium ion secondary battery as the electrode.

### Effects of the Invention

According to the electrolytic copper foil or the electrolytic copper foil for lithium ion secondary battery of the present invention, when using the copper foil as the collector, there can be provided an electrode for lithium ion secondary battery and a lithium ion secondary battery which are capable of suppressing formation of wrinkles etc. due to charging/discharging, capable of raising an energy density per volume of the lithium ion secondary battery, not suffering from breakage of the collector (copper foil), and having a high adhesion between the active material and the collector, so provided stable performances for a long period of time.

Since the lithium ion secondary battery of the present invention uses the above electrolytic copper foil for the above negative electrode of the battery, there can be provided a lithium ion secondary battery not forming wrinkles etc. in the collector due to charging/discharging, capable of raising an energy density per volume of the lithium ion secondary battery, not suffering from breakage of the collector, and having a high adhesion between the active material and the collector, so provide a stable performance for a long period of time.

### Brief Description of Drawings

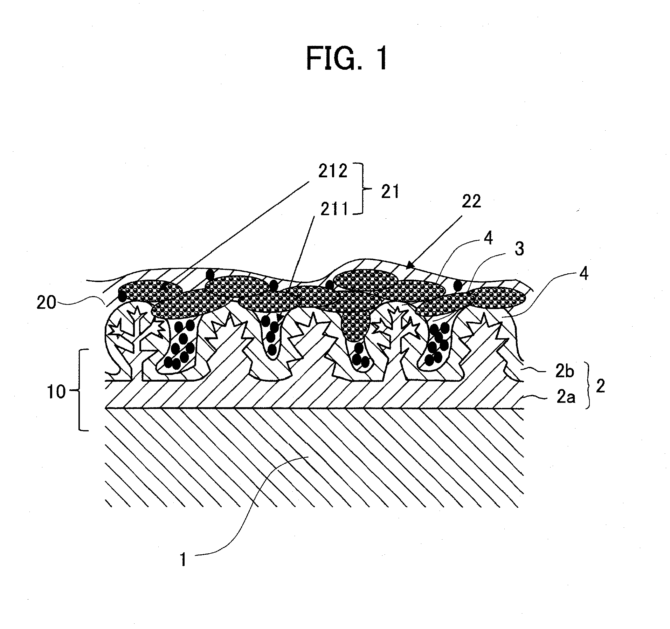

FIG. 1: A schematic view which shows a portion of a cross-section of a negative electrode of one embodiment of the present invention enlarged.

### Description of Embodiments

An electrolytic copper foil or an electrolytic copper foil for lithium ion secondary battery of the present invention is comprised of an untreated electrolytic copper foil on the two surfaces of which electroplating is used to deposit copper or copper alloy having a particle size of 3 µm or less for relief (uneven) roughening treatment.
When relief (uneven) roughening treatment is applied to the surfaces of the untreated copper foil by means of electroplating, particles are deposited and grow on the surfaces of the untreated copper foil in a dendritic state. Then, the electroplated surfaces which were deposited and grown in the dendritic state are cover plated. However, if the size of the copper or copper alloy particles is 3 µm or more at this time, the surface roughness Rz of the roughened surface will exceed 5 µm,or the surface roughness Ra will exceed 0.7 µm. Therefore, even if an active material is deposited on this surface, the adhesion between the copper foil (collector) and the active material will be bad, and deterioration of the battery will be quickened, so this is not preferred. Note that, the finer the size of particles for the roughening treatment, the more preferable. However, in actuality, it is difficult to make the copper or copper alloy particles finer to a particle size of 0.1 µm or less.
In the present invention, the size of particles to be deposited by electroplating is made 3 µm or less. When making the size of particles to be deposited 3 µm or less and depositing and growing the particles on the untreated copper foil surface in a dendritic state, then applying cover plating in the next step, surfaces having the surface roughness Rz of 1 µm to 5 µm or the surface roughness Ra of 0.25 µm to 0.7 µm are obtained, therefore the adhesion between the copper foil (collector) and the active material is good, and a cycle characteristic of the battery can be improved.

The surface roughnesses of the relief (uneven) roughened surfaces of the electrolytic copper foil of the present invention are 1.0 to 5 µm in terms of Rz, or 0.25 to 0.7 µm in terms of Ra with a difference of the roughness Rz between the front and back surfaces of within 3 µm or a difference of Ra of within 0.3 µm.This is because by applying roughening to the surfaces of the untreated copper foil so that Rz is 1.0 to 5 µm or Ra is 0.25 to 0.7 µm with the difference of roughness Rz between the front and back surfaces of within 3 µm or the difference of Ra of within 0.3 µm, the adhesion with the active material is improved and the change in volume along with the expansion and contraction of the battery can be absorbed by the space formed by the roughening.

As described above, the electrolytic copper foil of the present invention exhibits excellent effects as a collector for a lithium ion secondary battery. However, other than a collector for a lithium ion secondary battery, naturally it can be used for applications where expansion/contraction is intense. However, in the present specification, an explanation will be given below of an example where the electrolytic copper foil is used as a collector for a lithium ion secondary battery.

The untreated copper foil is preferably comprised of a granular crystal. This is because by the untreated copper foil being a granular crystal, the difference of roughening between the two surfaces in the state of the untreated copper foil can be made small and the difference of roughness after the roughening treatment can be made smaller. Also, this is because if the untreated copper foil is comprised of a columnar crystal, the difference of roughness between the two surfaces in the state of the untreated copper foil becomes large, therefore it is difficult to eliminate that difference even after the roughening treatment is carried out.

The copper alloy of the roughening treatment is preferably comprised of Cu as the principal ingredient and contains Mo, Fe, Ni, Co, W, As, or Zn or an alloy which contains one or more of these. This is because by forming the roughened layer by roughening particles made of a copper alloy containing Cu as the principal ingredient as described above, the adhesion between the roughening particles and the untreated copper foil is improved, and adjustment of roughness becomes easy by control of the crystal grain size of the roughening particles. Due to this, the coating property and adhesion of the active material (or slurry) is further improved.

Further, the copper foil is preferably electrolytic copper foil which has a surface roughness in the untreated state of 0.8 to 2.0 µm,a crystal structure at ordinary (atomosphere) temperature comprised of a granular crystal structure having a crystal grain size of not more than 5 µm, a tensile strength of 300 N/mm² or more at ordinary temperature, an elongation of 4.0% or more, and a tensile strength after an elapse of 15 hours at 150°C of 250 N/mm² or more.

In general, if the crystal grain size becomes larger, the tensile strength of the foil tends to fall and the elongation tends to become larger. When germanium, silicon, tin, or the like is used for the negative electrode active material, if the strength of the foil is low, the collector cannot absorb the expansion/contraction of the battery no matter what kind of roughening treatment is applied, therefore the foil breaks. In order to prevent this, preferably the tensile strength is 300 N/mm² or more and the elongation is about 4.0% or more. The crystal grain size at that time is preferably 5 µm or less. Further, the negative electrode current collector for a lithium ion secondary battery includes a drying step in its manufacturing process. If this drying is insufficient, the characteristics of the battery deteriorate. The drying conditions at this time are generally about 5 to 20 hours at 100 to 200°C. If the collector constituted by the copper foil softens at this time, breakage of the foil as explained above occurs at the time of charging/discharging, therefore the strength of the foil after drying becomes an important factor as well.
In order to suppress recrystallization under the above drying conditions, preferably the concentrations of additives in the electrolytic solution at the time of production of the untreated copper foil are MPS (sodium 3-mercapto-1-propanesulfonate): 3 to 10 ppm, HEC (hydroxyethyl cellulose/polysaccharide polymer): 15 to 20 ppm, and glue: 30 to 70 ppm.

Preferably the surface area ratio after the roughening treatment is 2 to 6X (times). The "surface area ratio" is the value obtained by using a VK-8500 made by Keyence Corporation to measure a 50 µm x 50 µm area and expressing the result as a ratio per 2500 µm². That is, an object having a surface area ratio of 1 is perfectly smooth. If the area is 5000 µm², the surface area ratio becomes 2X (times).
In the present invention, the untreated copper foil with roughnesses Rz of both surfaces of the surface contacting a titanium roll (cathode) (shiny surface or S surface) and the surface contacting the electrolytic solution (matte surface or M surface) of a low 0.8 µm to 2.0 µm is employed and treated for roughening. In the roughening treatment, roughening particles having a particle size of 0.1 to 3 µm are used to form roughened surfaces having an Rz of 1.0 to 5 µm or Ra of 0.25 to 0.7 µm by subsequent cover plating. By using untreated copper foil having low surface roughnesses, it becomes possible to make the surface area ratio 2 to 6X (times).
If the surface area ratio is less than 2X (times), the contact area of the active material becomes extremely small, the battery generates heat, and deterioration is accelerated as a result.
The larger the surface area, the larger the contact area with the active material layer and the lower the interface resistance. Due to this, the movement of electrons becomes smoother, and the capacity/output characteristics of the battery are improved. For this reason, preferably, the surface area of the collector is larger. However, if the surface area ratio exceeds 6X (times), the Rz of the roughened surfaces becomes too large. As a result, the active material layer does not reach the depths (bottom) of roughening (relief shapes), therefore voids are formed between the copper foil and the active material layer. As a result, the adhesion is bad, the conductivity falls, heat generation of the battery is caused, and deterioration of the battery is accelerated.

In the present invention, the tensile strength and the elongation are the values measured according to the method prescribed in the Japanese Industrial Standard (JIS K6251).
Further, the surface roughnesses Rz and Ra are the 10-point mean (average) roughness and arithmetical mean (average) roughness prescribed in the Japanese Industrial Standard (JIS B0601-1994) and, for example, are values measured by a surface roughness tester.

The untreated copper foil used for the electrolytic copper foil for lithium ion secondary battery of the present invention is produced by the method of using an aqueous solution of sulfuric acid-copper sulfate as the electrolytic solution, supplying the electrolytic solution between an insoluble anode made of titanium which is coated by a platinum group element or its oxide element and a cathode drum made of titanium which is disposed to face the anode, and rotating the cathode drum at a constant speed while running a DC current between the two electrodes to thereby make copper precipitate on the surface of the cathode drum, peeling off the precipitated copper from the surface of the cathode drum, and continuously taking it up.

The untreated copper foil used for the electrolytic copper foil for lithium ion secondary battery of the present invention can be produced by adding a compound having mercapto groups, chloride ions, and molecular weight 10000 or less low molecular weight glue and polysaccharide polymer to the sulfuric acid-copper sulfate electrolytic solution.

In order to make the surface roughness of the surfaces of the untreated electrolytic copper foil the Rz of 1.0 to 5 µm and the Ra of 0.25 to 0.7 µm,the surfaces of the untreated electrolytic copper foil are treated for relief (uneven) roughening. As this roughening treatment, the electroplating method can be preferably employed.
The electroplating method is a method of roughening the surfaces by forming a thin film layer having relief (uneven) shapes on the surfaces of the untreated electrolytic copper foil.

As the relief (uneven) roughening treatment, copper, copper alloy, or other plating layer containing copper as the principal ingredient is formed on the surfaces of the untreated electrolytic copper foil.
As the method of roughening the surfaces of the untreated electrolytic copper foil by electroplating, for example, preferably, there is used a roughening method by plating used for a copper foil for printed circuit use which is disclosed in PLT 5 (Japanese Patent Publication No. 53-39376 B2). That is, so-called "burnt plating" is used to form a granular copper plating layer, then "cover plating" is carried out on this granular copper plating layer so as not to spoil the relief (uneven) shapes and a substantially smooth plating layer is deposited to make the granular-shaped copper into a so-called bump-shaped copper layer.

By the above method, by the roughening treatment by means of electroplating, relief (uneven) roughened layers made of copper or copper alloy with a particle size of 0.1 µm to 3 µm are disposed on both surfaces of the untreated copper foil. This relief (uneven) roughening treatment is preferably carried out so that the distance between the adjoining projecting tips on the relief (uneven) roughened surfaces is smaller than or equal to the mean (average) particle size of the active material which will be explained later.
The distance between the adjoining projecting tips of the relief (uneven) roughened surfaces can be made to match with the particle size of the used active material by adjusting the treatment time of the "cover plating" or the current density.

The active material layer in the present invention is preferably a substance occluding and/or releasing lithium and an active material occluding lithium by alloying. As such an active substance material, there can be mentioned silicon, germanium, tin, lead, zinc, magnesium, sodium, aluminum, potassium, indium, and so on. Among them, silicon, germanium, and tin are preferably used due to their high theoretical capacities. Accordingly, the active material layer used in the present invention is preferably a layer containing silicon, germanium, or tin as a principal ingredient and is particularly preferably a layer containing silicon as a principal ingredient.

Further, sometimes the active material layer in the present invention is made of primary particles comprised of particles of the active material metal or its alloy itself and sometimes it is made of secondary particles obtained by using the primary particles as the principal ingredient and processing them to, for example, spherical shapes. In any case, the active material is preferably amorphous or microcrystalline. Accordingly, the primary particles are particularly preferably amorphous silicon or microcrystalline silicon.

The active material layer in the present invention can be formed by CVD, sputtering, vapor deposition, thermal spraying, or plating when forming it as a thin film. Among such methods, preferably it is formed by CVD or sputtering.
Further, in the case of the coating type, it is formed by rendering the active material into a slurry together with a binder and solvent, coating it on the surface of the collector (copper foil), drying, and pressing.
When processing to secondary particles, the particles can be produced by, for example, the method disclosed in above PLT's 6, 7, etc.

In the present invention, the collector is preferably one having a thin thickness. Accordingly, it is preferably a metal foil, particularly preferably an electrolytic copper foil. The active material layer can be formed by deposition on one surface or both surfaces of the collector. When forming the active material layer on both surfaces of the collector, preferably the surface roughnesses Rz of the two surfaces of the collector are 1.0 to 5 µm,or Ra are 0.25 to 0.7 µm and the difference of roughness Rz between the two surfaces (front and back) is within 3 µm or the difference of Ra is within 0.3 µm.

The thickness of the collector is preferably 8 µm when it is thin, while it is about 20 µm when it is thick. This is because, the strength of the foil cannot be maintained when it is less than 8 µm, therefore breakage occurs at the time of expansion/contraction of the active material. Further, when it exceeds 20 µm, the battery characteristics can be satisfied, but the battery itself becomes large and heavy, therefore, preferably, the thickness is up to about 20 µm.When the values of Ra and Rz become lower than the lower limits, the adhesion with the active material due to the anchor effect is poor. When it exceeds the upper limit, conversely, the active material layer does not uniformly enter into the depths of roughening, so the adhesion between the copper foil and the active material layer becomes bad. That is, when the values of Ra and Rz become large, the slurry of the active material with the binder and solvent does not uniformly enter into the depths of roughening together with the primary particles, therefore voids are formed between the copper foil and the active material layer and consequently the adhesion is poor. Further, the contact area with the secondary particles decreases as well, so the battery characteristics becomes poorer. Accordingly, by selecting suitable values of Ra and Rz, the adhesion between the collector and the active material layer is improved, so the cycle characteristic of the battery is improved.
Note that, if there is a large difference of surface roughness between the front and back of the copper foil, the thickness of active material will differ between the two surfaces in the step of coating the active material on the surfaces of the copper foil (collector), therefore an adverse influence will be exerted upon the characteristics of the finished electrode, so a difference of roughness between the front and back surfaces is prevented as much as possible.

FIG. 1 is an enlarged schematic view of a cross-section of a negative electrode showing an embodiment of the present invention. In the drawing, an untreated copper foil 1 is provided on its surface with a roughened layer 2 comprised of a burnt plating layer 2a and a cover plating layer 2b to form an electrolytic copper foil 10. On this, an active material 20 is deposited. As shown in the figure, the electrolytic copper foil 10 having the roughened layer 2 for negative electrode is formed so that, as shown in the figure, openings 3 of recessed parts of the roughened layer 2 (distance of adjoining projecting parts 4 and 4 of relief (uneven) shapes of the roughened layer) are formed larger than the mean (average) particle size of the particles 211 of the active material 21.
For example, when mixing, as the active material of the primary particles, silicon (SiO) and acetylene black, PVDF (polyvinylidene fluoride), and NMP (N-methylpyrrolidone) to form a slurry, coating this on the collector, and drying and pressing this, due to the coating, drying, and pressing of the slurry, the binder 22 and the fine particle active material (smaller than the mean particle size) enter into the openings 3 of the recessed parts of the roughened layer 2 while the large particle active material is deposited extending over the projecting parts 4. Then, after the binder 22 is hardened, the active material 21 located around the projecting parts 4 of the roughened layer pulls together the projecting parts 4 of the roughened layer of the copper foil 10 to thereby contribute to the adhesion and further contributes to the conductivity between the active material 21 and the copper foil 10 and to the improvement of the battery characteristics. Further, the active material entering into the openings 3 is small in particle size, therefore its expansion/contraction is absorbed by the extension of the copper foil and the binder, so the influence upon the copper foil is kept small.
Further, when coating the secondary processed active material on the collector together with slurry etc. and drying, pressing, and depositing it, in the same way as that described above, the secondary active material 212 is deposited while extending over the spaces between the projecting parts 4 and 4 of the roughened layer, the active material 212 pulls together the projecting parts 4 of the roughened layer of the copper foil 10 to thereby contribute to the adhesion and further contributes to the conductivity between the active material 21 and the copper foil 10 and to the improvement of the battery characteristics. Further, the small particle size active material 211 desorbed from the now secondary particle active material enters into the openings 3, but the active material 211 is small in particle size, so its expansion/contraction is absorbed by the elongation of the copper foil and by the binder, so the influence upon the copper foil is kept small.

In the active material layer in the present invention, lithium may be occluded or added in advance as well. The lithium may be added when forming the active material layer as well. That is, the active material layer containing lithium in advance is formed on the surface of the collector. Further, after forming the active material layer, lithium may be occluded or added into the active material layer as well. As the method of occluding or adding lithium into the active material layer, there is known a method of electrochemically occluding or adding lithium or the like.

The lithium ion secondary battery of the present invention is provided with a negative electrode formed by an electrode for lithium ion secondary battery of the present invention described above, a positive electrode using a substance occluding/releasing lithium for the active material, and a nonaqueous electrolyte.

The nonaqueous electrolyte which is used in the lithium ion secondary battery of the present invention is an electrolyte which is obtained by dissolving a solute in a solvent. The solvent of the nonaqueous electrolyte is not particularly limited so far as it is a solvent which is used in a lithium ion secondary battery. Nevertheless, there can be mentioned, for example, ethylene carbonate, propylene carbonate, butylene carbonate, vinylene carbonate, and other cyclic carbonates, and dimethyl carbonate, diethyl carbonate, methylethyl carbonate, and other chain carbonates. Preferably, use is made of a mixed solvent of a cyclic carbonate and a chain carbonate. Further, use may be made of a mixed solvent of the above cyclic carbonate with 1,2-dimethoxymethane, 1,2-diethoxyethane, or other ether solvent or with γ-butyrolactone, sulfolane, methyl acetate, or other chain ester as well.

The solute of the nonaqueous electrolyte is not particularly limited so far as it is a solute which is used in a lithium ion secondary battery. There can be mentioned, for example, LiPF₆ , LiBF₄ , LiCF₃SO₃, LiN(CF₃SO₂)₂, LiN(C₂F₅SO₂)₂, LiN(CF₃SO₂) (C₄F₉SO₂), LiC(CF₃SO₂)₃, LiC(C₂F₅SO₂)₃, LiAsF₆, LiClO₄, Li₂B₁₀Cl₁₀, Li₂B₁₂Cl₁₂, and so on. In particular, preferably, there is used a mixed solute of LiXFy (in the formula, X represents P, As, Sb, B, Bi, Al, Ga, or In, y is 6 when X is P, As, or Sb, while y is 4 when X is B, Bi, Al, Ga, or In) with a lithium perfluoroalkylsulfonic acid/imide LiN (CₘF₂ₘ₊₁SO₂) (CₙF₂ₙ₊₁SO₂) (in the formula, m and n are independent integers of 1 to 4) or lithium perfluoroalkylsulfonic acid/methide LiC (CₚF₂ₚ₊₁SO₂) (C_{q}F_{2q+1}SO₂) (CᵣF₂ᵣ₊₁SO₂) (in the formula, p, q, and r are independent from each other and are integers of 1 to 4). Among them, a mixed solute of LiPF₆ with LiN(C₂F₅SO₂)₂ is particularly and preferably used.

Further, as the nonaqueous electrolyte, there can be used a gelatinous polymer electrolyte obtained by impregnating an electrolytic solution into polyethylene oxide, polyacrylonitrile, polyvinylidene fluoride, or other polymer electrolyte or an inorganic solid electrolyte such as Lil or Li₃N.

The electrolyte of the lithium ion secondary battery of the present invention can be used without restriction so long as the Li compound serving as the solute for manifesting the ion conductivity and the solvent dissolving and retaining this do not decompose due to voltage at the time of battery charging, discharging, or storage.

Further, as the positive electrode active material used for the positive electrode, LiCoO₂, LiNiO₂, LiMn₂O₄, LiMnO₂, LiCo_{0.5}Ni_{0.5}O₂, LiNi_{0.7}Co_{0.2}Mn_{0.1}O₂, and other lithium-containing transition metal oxides and metal oxides not containing lithium, for example, MnO₂ may be exemplified. Further, other than these, a substance which electrochemically occludes and releases lithium can be used without limit.

According to the present invention, there can be provided a lithium ion secondary battery capable of suppressing formation of wrinkles etc. or breakage in the collector due to charging/discharging, raising the energy density per volume of the lithium ion secondary battery, and maintaining stable performance over a long period of time. Examples

Below, the present invention will be explained in further detail based on embodiment examples, but the present invention is not limited to the following embodiment examples in any way. It is possible to suitably modify and work the invention within a range not changing the gist thereof. Embodiment Examples 1 to 6 and Comparative Examples 1 to 8

### Production of Untreated Copper Foil

In an acidic copper electrolytic bath containing 70 to 130 g/liter of copper and 80 to 140 g/liter of sulfuric acid, additives having compositions shown in Table 1 were added. In the table, "MPS" is sodium 3-mercapto-1-propanesulfonate, "HEC (polysaccharide polymer)" is hydroxyethyl cellulose, and the glue is a low molecular weight glue having a molecular weight of 3,000. The MPS, HEC, and chloride ions were added so as to give the concentrations shown in Table 1 to thereby prepare electrolytic solutions for forming foils. Note that, the chloride ion concentrations were all adjusted to 30 ppm, but the chloride ion concentration is suitably changed according to the electrolytic conditions and is not limited to this concentration.
The prepared electrolytic solutions were used and a precious metal oxide-coated titanium electrode was used as the anode and a rotating drum made of titanium as the cathode to produce untreated copper foils having a thickness of 10 µm under the electrolytic conditions shown in Table 1 (current density and liquid temperature) according to the electrolytic foil formation method. The performances of the prepared copper foils are shown in Table 2.

Note that, the "thickness" is the value measured by a micrometer, and the "tensile strength" and "elongation" are values measured by using a tensile tester (1122 model made by Instron Corporation). Further, the surface roughnesses Ra and Rz were measured by a stylus type surface roughness measuring instrument (SE-3C model made by Kosaka Laboratory Ltd.)

**Table 1. Compositions of electrolytic solutions and electrolytic conditions**

| Electrolytic copper foil | Cu (g/liter) | H₂SO₄ (g/liter) | MPS (ppm) | HEC (ppm) | Glue (ppm) | Chlorine (ppm) | Current density (A/dm²) | Liquid temperature (°C) |
|---|---|---|---|---|---|---|---|---|
| A1 | 90 | 100 | 5.0 | 15.0 | 35.0 | 30.0 | 55 | 60 |
| A2 | 90 | 100 | 10.0 | 20.0 | 70.0 | 30.0 | 55 | 60 |
| A3 | 90 | 100 | 3.0 | 18.0 | 30.0 | 30.0 | 55 | 60 |
| B1 | 90 | 100 | - | 4.0 | - | 30.0 | 55 | 60 |
| B2 | 90 | 100 | - | 20.0 | - | 30.0 | 55 | 60 |
| B3 | 90 | 100 | 5.0 | 15.0 | 15.0 | 30.0 | 55 | 60 |

**Table 2. Performance of Copper Foil (Untreated Copper Foil)**

| | | | | | | | | Room temperature | | After heating at 150°Cx15 hr | |
|---|---|---|---|---|---|---|---|---|---|---|---|
| Untreated copper foil | Thickness (µm) | Ra (µm) | | Rz (µm) | | Crystal Structure | Crystal grain size | Tensile strength (N/mm²) | Elongation (%) | Tensile strength (N/mm²) | Elongation (%) |
| | | S surface | M surface | S surface | M surface | | | | | | |
| A1 | 10.0 | 0.27 | 0.28 | 1.5 | 1.3 | Granular | 4 µm | 330 | 6.8 | 270 | 9.8 |
| A2 | 10.0 | 0.27 | 0.20 | 1.5 | 0.8 | Granular | 5 µm | 340 | 7.2 | 280 | 10.7 |
| A3 | 10.0 | 0.27 | 0.30 | 1.5 | 2.0 | Granular | 4 µm | 310 | 8.4 | 260 | 12.0 |
| B1 | 10.0 | 0.27 | 0.42 | 1.5 | 2.6 | Columnar | - | 330 | 4.5 | 230 | 8.4 |
| B2 | 10.0 | 0.27 | 0.30 | 1.5 | 1.9 | Columnar | - | 400 | 3.2 | 260 | 6.6 |
| B3 | 10.0 | 0.27 | 0.26 | 1.5 | 1.4 | Granular | 7 µm | 310 | 8.3 | 250 | 12.0 |

### Preparation of Acting Electrode (Negative Electrode)

To the two surfaces of each of the copper foils formed under the above conditions, copper was plated by burnt plating by electroplating under the following conditions to form powder copper plating layers. Further, the powder copper plating layers were densely plated (cover plated) so as not to spoil their relief (uneven) shapes to thereby improve the adhesion between the powder copper and the electrolytic copper foil and thus prepare the roughened electrolytic copper foil which is shown in Table 3.

### Burnt Plating (Powder Plating) Conditions

Copper sulfate: 80 g/liter
Sulfuric acid: 110 to 160 g/liter
Additive*: suitable quantity
Solution temperature: 30 to 60°C
Current density: 10 to 50 A/dm²
Treatment time: 2 to 20 seconds

### Cover Plating (Dense Copper Plating) Conditions

Copper sulfate: 200 g/liter
Sulfuric acid: 90 to 130 g/liter
Solution temperature: 30 to 60°C
Current density: 10 to 30 A/dm²
Treatment time: 2 to 20 seconds
*Additive: Alloy containing at least one element among Mo, Fe, Ni, Co, W, As, and Zn.

The Ra, Rz, Sm, diameters of roughening particles, and surface areas on the surfaces after the relief (uneven) roughening treatment were measured by the measurement methods described above. Further, the surface areas were measured by using the VK-8500 made by Keyence Corporation, and the crystal grain sizes were measured from SEM images.

**Table 3**

| | Untreated collector | Ra after roughening | | Rz after roughening | | Roughening particle size | | Sm after roughening | | Surface area ratio | | Ratio of two surfaces M surface/S surface | Collector after roughening |
|---|---|---|---|---|---|---|---|---|---|---|---|---|---|
| | | S surface | M surface | S surface | M surface | S surface | M surface | S surface | M surface | S surface | M surface | | |
| Work. Ex. 1 | A1 | 0.37 | 0.33 | 2.06 | 1.75 | 0.5 | 0.2 | 13.79 | 13.66 | 2.4 | 4.2 | 1.8 | x1 |
| Work. Ex. 2 | A1 | 0.43 | 0.33 | 2.56 | 1.83 | 1.5 | 0.5 | 12.53 | 12.73 | 3.6 | 3.8 | 1.0 | x2 |
| Work. Ex. 3 | A1 | 0.42 | 0.30 | 2.46 | 1.47 | 0.8 | 0.7 | 14.38 | 10.00 | 3.0 | 2.6 | 0.9 | x3 |
| Work. Ex. 4 | A1 | 0.67 | 0.38 | 4.14 | 2.45 | 2.5 | 1.0 | 12.94 | 14.69 | 5.9 | 5.9 | 1.0 | x4 |
| Comp. Ex. 1 | A1 | 0.42 | 1.11 | 2.60 | 6.51 | 1.8 | 4.8 | 12.26 | 14.46 | 3.6 | 9.1 | 2.5 | y1 |
| Comp. Ex. 2 | A1 | 0.81 | 0.30 | 5.13 | 1.52 | 3.6 | 0.8 | 23.22 | 27.53 | 7.5 | 2.7 | 0.4 | y2 |
| Work. Ex. 5 | A2 | 0.36 | 0.25 | 1.95 | 1.03 | 0.4 | 0.1 | 22.94 | 24.34 | 2.3 | 2.2 | 1.0 | x5 |
| Work. Ex. 6 | A3 | 0.46 | 0.65 | 2.80 | 4.81 | 2.5 | 3.0 | 50.00 | 30.62 | 5.3 | 5.8 | 1.1 | x6 |
| Comp. Ex. 3 | A3 | 0.40 | 0.75 | 2.32 | 5.31 | 1.5 | 3.0 | 18.16 | 13.32 | 4.4 | 6.5 | 1.5 | y7 |
| Comp. Ex. 4 | B1 | 0.68 | 0.49 | 4.32 | 2.95 | 1.5 | 0.5 | 17.34 | 14.44 | 7.7 | 7.1 | 0.9 | y3 |
| Comp. Ex. 5 | B1 | 0.69 | 0.47 | 4.20 | 3.05 | 1.5 | 0.1 | 23.22 | 17.69 | 8.0 | 5.5 | 0.7 | y4 |
| Comp. Ex. 6 | B1 | 0.96 | 1.28 | 5.56 | 7.36 | 2.0 | 5.0 | 12.6 | 24.61 | 7.9 | 10.1 | 1.3 | y5 |
| Comp. Ex. 7 | B2 | 0.58 | 0.55 | 4.06 | 2.75 | 2.5 | 1.8 | 22.94 | 28.62 | 7.0 | 4.9 | 0.7 | y8 |
| Comp. Ex. 8 | B3 | 0.40 | 0.29 | 2.30 | 1.60 | 1.3 | 0.2 | 40.49 | 48.85 | 2.9 | 2.8 | 1.0 | y6 |

The prepared roughened electrolytic copper foils were used as collectors for the following evaluation.
Silicon (SiO) electrodes were prepared by coating collectors X1 to X4 and Y3 to Y6 with slurries formed by mixing silicon (SiO) and acetylene black, PVDF (polyvinylidene fluoride), and NMP (N-methylpyrrolidone), then drying and pressing.

### Preparation of Beaker Cell

By using the above acting electrodes (negative electrodes), a three-electrode method beaker cell was prepared in a glove box under an argon gas atmosphere. The beaker cell was composed by immersing a counter electrode, a acting electrode, and a reference electrode in an electrolytic solution put in a glass vessel. As the electrolytic solution, there was used an electrolytic solution obtained by dissolving 1 mol/liter of LiPF₆ in a solvent obtained by mixing ethylene carbonate and diethyl carbonate with a volume ratio of 3:7. As the counter electrode and reference electrode, lithium metal was used.

### Evaluation of Charge-Discharge Cycle Characteristic

The beaker cell prepared as described above was charged by a constant current of 4 mA at 25°C so that the potential of the acting electrode reached 0V (vs.Li/Li⁺), then was discharged by a constant current of 4 mA until the potential of the acting electrode reached 2V (vs.Li/Li⁺). It was evaluated by the discharge capacity retention rate after 100 cycles of charge-discharge efficiency. The results of evaluation are shown in Table 4.
Further, any breakage of the copper foil after repeating charge- discharge for 300 cycles is shown in Table 4 as well.

**Table 4**

| Electrode | Discharge capacity retention (%) after 100 cycles of charge/discharge | | Breakage of foil after 300 cycles |
|---|---|---|---|
| | S surface | M surface | |
| Example 1 | 72 | 70 | None |
| Example 2 | 69 | 68 | None |
| Example 3 | 74 | 78 | None |
| Example 4 | 70 | 65 | None |
| Comparative Example 1 | 69 | 33 | None |
| Comparative Example 2 | 28 | 69 | None |
| Example 5 | 71 | 68 | None |
| Example 6 | 66 | 67 | None |
| Comparative Example 3 | 68 | 30 | None |
| Comparative Example 4 | 55 | 40 | Present |
| Comparative Example 5 | 53 | 33 | Present |
| Comparative Example 6 | 26 | 23 | Present |
| Comparative Example 7 | 62 | 55 | Present |
| Comparative Example 8 | 70 | 66 | Present |

As shown in Table 3 and Table 4, in the collectors in Examples 1 to 6, the Ra, Rz, and differences in Ra and in Rz after roughening were all within the standard values, the sizes and surface areas of the roughening particles were within the standard values as well, therefore the charge-discharge cycle characteristics in the beaker cell batteries prepared by such collectors were all evaluated as satisfactory. No breakage was seen in the collectors after repeating charge-discharge for 300 cycles.

On the other hand, in Comparative Examples 1 and 2, untreated copper foils the same as that in Example 1 were used, but, in the two, the differences in roughnesses Ra and Rz between the two surfaces after the roughening treatment were large. Accordingly, the discharge capacity retention after 100-cycle charge-discharge efficiency became unsatisfactory.
In Comparative Example 3, the same untreated copper foil as that in Example 7 was used, but the difference in the roughness Ra after roughening was large, and the surface area was large. Therefore, the discharge capacity retention after 100-cycle charge-discharge efficiency became unsatisfactory.

In Comparative Examples 4 to 6, the crystal structures of the untreated copper foils were columnar, therefore both the roughnesses Ra and Rz after roughening were large, so all of the results of evaluation of charge-discharge characteristics in the beaker cell batteries became unsatisfactory.
In Comparative Example 7, the crystal structure of the untreated copper foil was columnar in the same way as Comparative Example 4, and the surface area after the roughening treatment was large as well. Therefore, all of the results of evaluation of the charge-discharge characteristic in the beaker cell battery became unsatisfactory.
In Comparative Example 8, the crystal grain size of the untreated copper foil was large, and breakage was seen in the collector after repeating charge/discharge 300 cycles.

According to the present invention, by applying roughening treatment to both surfaces of copper foil and eliminating the difference in shape between the two surfaces, there can be provided a lithium ion secondary battery capable of suppressing formation of wrinkles, breakage, and other deformation in the collector due to charging/discharging, capable of raising the energy density per volume of the lithium ion secondary battery, not suffering from a drop of the capacity even when the charge-discharge cycle is repeated, having a long service life, and capable of reduction in size.

### Reference Signs List

- 10: electrolytic copper foil
- 1: untreated copper foil
- 2: roughened layer
- 3: recessed part of roughened surface
- 4: projecting part of roughened surface
- 20: active material layer
- 21: active material
- 211: small particle size active material
- 212: large particle size active material, secondary particles obtained by processing the active material
- 22: binder

## Claims

1. An electrolytic copper foil comprising an untreated copper foil, on the both front and back surfaces of which relief (uneven) roughened layers comprised of copper or copper alloy and having a particle size of 3 µm or less, are provided by roughening treatment of electroplating,
surface roughnesses Rz of the relief (uneven) roughened layers of the both surfaces being 1.0 to 5 µm or surface roughness Ra of the relief (uneven) roughened layers being 0.25 to 0.7 µm,and
a difference of a roughness between the roughnesses Rz of the front and back surfaces being within 3 µm or a difference of a roughness between the roughnesses Ra of the front and back surface being within 0.3 µm.

2. The electrolytic copper foil as set forth in claim 1, wherein the untreated copper foil comprises a granular crystal.

3. The electrolytic copper foil as set forth in claim 1, wherein the copper alloy of the roughening treatment is comprised of Cu as the principal ingredient and contains Mo, Fe, Ni, Co, W, As, or Zn or an alloy which contains one or more of these.

4. An electrolytic copper foil for lithium ion secondary battery comprising an untreated copper foil, on the both front and back surfaces of which relief (uneven) roughened layers comprised of copper or copper alloy and having a particle size of 3 µm or less, are provided by roughening treatment of electroplating,
surface roughnesses Rz of the relief (uneven) roughened layers of the both surfaces being 1.0 to 5 µm or surface roughness Ra of the relief (uneven) roughened layers being 0.25 to 0.7 µm,and
a difference of a roughness between the roughnesses Rz of the front and back surfaces being within 3 µm or a difference of a roughness between the roughnesses Ra of the front and back surface being within 0.3 µm.

5. An electrolytic copper foil for lithium ion secondary battery comprising an untreated copper foil, on the both front and back surfaces of which relief (uneven) roughened layers comprised of copper or copper alloy and having a particle size of 3 µm or less, are provided by roughening treatment of electroplating,
surface roughnesses Rz of the relief (uneven) roughened layers of the both surfaces being 1.0 to 5 µm or surface roughness Ra of the relief (uneven) roughened layers being 0.25 to 0.7 µm, and
a difference of a roughness between the roughnesses Rz of the front and back surfaces being within 3 µm or a difference of a roughness between the roughnesses Ra of the front and back surface being within 0.3 µm, and,
a distance between adjoining projecting tips of the relief (uneven) roughened surface being larger than an average particle size of primary particles of an active material of the lithium ion secondary battery and being smaller than or equal to an average particle size of secondary particle of the active material of the lithium ion secondary battery.

6. The electrolytic copper foil for lithium ion secondary battery as set forth in claim 4 or 5, wherein the untreated copper foil comprises a granular crystal.

7. The electrolytic copper foil for lithium ion secondary battery as set forth in claim 4 or 5, wherein the copper alloy of the roughening treatment is comprised of Cu as the principal ingredient, and contains Mo, Fe, Ni, Co, W, As, or Zn or an alloy which contains one or more of these.

8. The electrolytic copper foil for lithium ion secondary battery as set forth in any one of claims 4 to 7, wherein a surface area ratio after the roughening treatment is 2 to 6X (times).

9. The electrolytic copper foil for lithium ion secondary battery as set forth in any one of claims 4 to 7, wherein a tensile strength after heating at 150°C for 15 hours is 250 N/mm² or more.

10. The electrolytic copper foil for lithium ion secondary battery as set forth in claim 5, wherein the active material for lithium ion secondary battery is the active material itself (primary particles) or an active material (secondary particles) obtained by processing the active material.

11. An electrode for lithium ion secondary battery comprising an electrolytic copper foil for lithium ion secondary battery as set forth in any one of claims 4 to 10, in which, on the surface of the electrolytic copper foil, silicon, germanium, tin, or an alloy compound of the same or an active material containing these as principal ingredients, is deposited.

12. A lithium ion secondary battery, in which an electrode for lithium ion secondary battery as set forth in claim 11 is used.
